# EUROPEAN PATENT APPLICATION

(11) **EP 3 018 425 A2**
(43) Date of publication of application: **11.05.2016**
(21) Application number: 15189509.1
(22) Date of filing: 13.10.2015
(51) Int. Cl.: F24F 12/00

(54) **HEAT EXCHANGE VENTILATION DEVICE**

(30) Priority: 16.10.2014 DK 201470642
(71) Applicant: KVM-Genvex A/S, 6100 Haderslev (DK)
(72) Inventor: Thomsen, Torben R., 6100 Haderslev (DK); Nielsen, Leif B., 6100 Haderslev (DK)
(74) Representative: Gregersen, Niels Henrik

(57) **Abstract**

Ventilation system, comprising a housing with a countercurrent heat exchanger, plus two systems, where each system comprises at least one inlet, one outlet, an inlet chamber, an outlet chamber, and a ventilator with motor and where each system comprises at least the following connections: inlet, inlet chamber, countercurrent heat exchanger, outlet chamber, ventilator air inlet and outlet and where there is a ventilator in connection with each ventilator air inlet, where the inlet chambers and the outlet chambers are made from at least parts of the housing, the countercurrent heat exchanger and an intermediate plate, where the intermediate plate has a ventilator air inlet and, connected to this, means of installation of a ventilator, thereby achieving a ventilation system which can be used in houses, apartments and buildings in general in connection with renovation, where there is a demand for a minimum ceiling height and demands regarding energy saving products.

## Description

### Field of the invention

The present invention concerns a ventilation system, comprising a housing with a countercurrent heat exchanger, plus two systems, where each system comprises at least one inlet, one outlet, an inlet chamber, an outlet chamber, and a ventilator with motor and where each system comprises at least the following connections: inlet, inlet chamber, countercurrent heat exchanger, outlet chamber, ventilator air inlet and outlet and where there is a ventilator in connection with each ventilator air inlet.

### Prior art

It is known how to install ventilation systems under existing ceiling with ducting and insulation. In some countries there is required a minimum ceiling height, such as 2.3 meters. The ventilation systems found on the market change the air direction up to several times. They therefore have an increased energy consumption, and the systems do not have sufficient pressure at the outlet connections to the rest of the ducting system in the home. In order to reduce the height of the ventilation systems a compromise has been made with the configuration of the ventilator housing, which therefore does not match up with the selected ventilator size.

### Purpose of the invention

The purpose of the invention is to provide a ventilation system which can be used in houses, apartments and buildings in general in connection with renovation, where there is a demand for a minimum ceiling height and demands regarding energy saving products.

Another purpose is to minimize the pressure loss in order to achieve a larger external differential pressure to the piping which is connected to the system, accomplishing a reduced energy consumption for the ventilation.

Furthermore, the purpose of the invention is to make the system able to reduce the CO² emissions as compared to known systems, wherein the reduction of the CO² emissions occurs as a result of a very low energy consumption and continued high pressure.

### Description of the invention

According to a first aspect of the invention, the aforementioned purposes are accomplished with a ventilation system as described at the outset and as described in the preamble of claim 1, where the inlet chambers and the outlet chambers are made from at least parts of the housing, the countercurrent heat exchanger and an intermediate plate, where the intermediate plate has a ventilator air inlet and, connected to this, means of installation of a ventilator.

This makes it possible to have a very compact ventilation system with a system height of 220 mm, for example, which could be used in houses, apartments, or buildings in general in connection with renovations or new construction, where there is a demand for a minimal ceiling height and where the ventilation system therefore must not have too large a system height.

The ventilation system is able to minimize the pressure loss and achieve a greater external differential pressure to the piping which is connected to the ventilation system, and therefore it has a very low energy consumption when the correct ventilator size and the size of the countercurrent heat exchanger is chosen.

Since external dimensions, especially the height, have decisive importance on the application possibilities of the ventilation system, the air flow is optimized through the ventilation system so that the pressure loss is minimized, with the advantage that a larger external differential pressure is available, thereby achieving a significantly reduced energy consumption for ventilation of the house as compared to existing ventilation systems.

The present invention in a second aspect also involves a ventilation system, where each intermediate plate at the place where there are means for installation of a ventilator has an angle of 5-45 degrees, preferably 5-15 degrees, more preferably 10 degrees in relation to the plane of the intermediate plate.

This makes it possible to solve several tasks at the same time, since the intermediate plate forms a separation between inlet chamber and outlet chamber, and optimizes the air flows on both sides of the intermediate plate. Furthermore, it is possible to place and secure a ventilator on the intermediate plate, since the intermediate plate has a lowering which is prepared for a ventilator housing and for the purpose of reducing the height of the ventilation system.

The present invention in a third aspect also involves a ventilation system, where each intermediate plate comprises at least one air guide and an air shield.

This makes it possible to separate the air flows in the ventilation system and at the same time isolate the cold air stream from the warm air stream. Since the construction of the intermediate plate has great influence on the air flow through the ventilation system, both above and below the intermediate plate, the configuration of the intermediate plate is double curved in order to optimize the air flow, which is critical to the energy consumption of the entire ventilation system.

With the intermediate plate's double-curved configuration, an integrated air guide and an air shield around the ventilator housing, an even distribution of the air flow over the entire countercurrent heat exchanger's area is possible and at the same time turbulence can be avoided and an optimal efficiency of the countercurrent heat exchanger can be achieved.

In the inlet chamber there is placed an air guide on the intermediate plate, where the air guide has a very particular curvature which helps to guide the air over the entire countercurrent heat exchanger. The air guide can alternatively have a different width, height and curvature, and also alternatively there can be more, less, longer or taller air guides.

In the inlet chamber the air shield goes around the ventilator housing, which ensures even air flows, with resulting high efficiency in the countercurrent heat exchanger and minimal energy consumption in the ventilators. The air shield can alternatively have a different curvature, shape, or be entirely omitted, as long as the outer shape of the ventilator housing is sufficient to achieve the optimal air flows.

The optimal configuration of the intermediate plate has been produced by a 3D flow simulation.

The present invention in a fourth aspect also concerns a ventilation system, where each ventilator is a radial ventilator, and each ventilator is encapsulated in a snail-shaped ventilator housing.

This makes it possible to draw air in through the ventilator air inlet, which is at the center of the ventilator housing, where the ventilator housing is dimensioned for the individual type of ventilator. Thus, the air is taken in at the middle of the ventilator housing, which is snail-shaped and furthermore angled in relation to the plane of the intermediate plate, and the air is then forced out through the outlet.

By making an inclination for the intermediate plate, so that the ventilator housing is angled, and by optimizing at the same time the ventilator and the area around the ventilator, the inlet chamber is optimized so that the energy consumption is reduced, resulting in low air volume and low external pressure.

There are various radial ventilators, with B-wheel (backward directed vanes), with P-wheel (planar backward directed vanes), with F-wheel (forward directed) and with T-wheel (straight vanes).

Thus, there are many variation options, all depending on the desired efficiency, noise level, and outside dimensions for the ventilator or the ventilation system as a whole.

The present invention in a fifth aspect also involves a ventilation system, where each ventilator is driven by a motor and controlled by a frequency converter.

This makes it possible to draw air in through the inlets to a countercurrent heat exchanger by means of an EC frequency-controlled ventilator mounted in a ventilator housing, where the ventilators have a frequency-controlled EC motor built into the ventilator housings.

An alternative is the use of a frequency converter and a motor for both ventilators, as long as the ventilator speeds are the same and thus synchronized.

The present invention in a sixth aspect also involves a ventilation system, where the countercurrent heat exchanger comprises flexible plates.

The plates of the countercurrent heat exchanger can be made of aluminum or polymers such as plastic, polystyrene or the like.

This makes it possible to exchange the warmer air with the colder air over the largest possible surface. A countercurrent heat exchanger is preferable here, because there are neither moving parts nor fluids in the system and the housing space can be utilized optimally.

The present invention in a seventh aspect also involves a ventilation system, where the countercurrent heat exchanger comprises a by-pass valve.

This makes it possible to conduct air around the countercurrent heat exchanger, partly for faster cooldown of the building in the summertime and for minimization of any icing of the countercurrent heat exchanger in the wintertime during low outdoor temperature, where the diameter and depth of the by-pass valve depend on the necessary and desired air volume.

Furthermore, the by-pass valve can be advantageously an on/off or modulating type, and form a complete unit with integrated motor having minimal torque in order to reduce the energy consumption by the motor, which also has influence on the SEL value (electrical consumption for the ventilator/electrical consumption for air transport and electrical consumption for control).

The present invention in an eighth aspect also involves a ventilation system, where the by-pass valve comprises a complete unit with integrated motor, where the unit comprises at least two complementary sections, where one motor drives the at least one section in relation to the second section.

This makes it possible to have a by-pass valve which can rotate and where the by-pass valve can comprise a top and bottom section, which are screwed or clamped together or secured by another type of locking function and where integrated guide pins in the bottom determine how long the by-pass valve can rotate.

The present invention in a ninth aspect also involves a ventilation system, where the inlets and outlets are conical.

This makes it possible to distribute the air from fewer pipes, via a conical inlet which functions as a diffuser, in better fashion over the countercurrent heat exchanger, which thus means that the countercurrent heat exchanger can be utilized optimally, and then via a conical inlet which acts as an ejector the air is further sent from the ventilation system and out from the system.

It can also be advantageous to distribute the air broadly in the system at inlet and outlet and reduce the pressure loss by integrating a large radius, which means that the air distribution across the countercurrent heat exchanger is optimally utilized.

The present invention in a tenth aspect also involves a ventilation system, where all motors and frequency converters are integrated in the housing of the ventilation system.

This makes it possible to mount and install the system as a unit, a so-called "plug and play" installation, where power and ventilation pipes are simply hooked up to the ventilation system and the ventilation system is ready to be operated.

Alternatively the motors and frequency converters can of course be installed in a control housing or other unit placed decentralized with regard to the housing.

### Description of drawings

The invention shall be explained more closely below by describing nonlimiting embodiments with regard to the drawings, where:
- Figure 1a-c: shows the ventilation system from the side in sectional view, from above and from the end,
- Figure 2a-b: shows the intermediate plate from the front and from the bottom,
- Figure 3a-b: shows the intermediate plate likewise seen from the bottom,
- Figure 4a-b: shows the intermediate plate seen from the top,
- Figure 5a-b: shows an example of alternative pipe connections,
- Figure 6a-c: shows a by-pass valve, in an embodiment respectively assembled and exploded, and
- Figure 7a-b: shows a by-pass valve, in another embodiment, likewise assembled and exploded, and
- Figure 8: shows an embodiment of the ventilation system

### List of reference numbers:

- 1: Ventilation system
- 2: Air flow arrow
- 3: Inlet
- 4: Inlet chamber
- 5: Countercurrent heat exchanger
- 6: Outlet chamber
- 7: Ventilator air inlet
- 8: Ventilator
- 9: Outlet
- 10: Top side
- 11: Bottom side
- 12: Intermediate plate
- 13: Housing
- 14: Air shield
- 15: Air guide
- 16: Ventilator housing
- 17: Plane of the intermediate plate
- 18: Angle
- 19: Means for mounting a ventilator
- 20: Air shield
- 21: Conical inlet pipe
- 22: Conical outlet pipe
- 23: By-pass valve
- 24: Top section
- 25: Bottom section
- 26: Guide pin
- 27: Track
- 28: Motor
- 29: Air flow
- 30: Track

### Detailed description of the invention

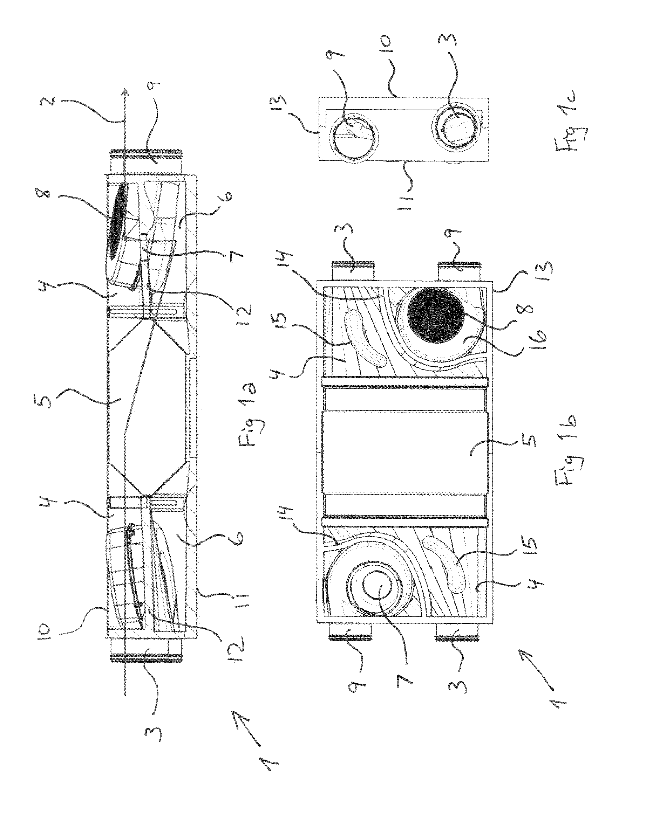

A ventilation system according to the invention is shown in figures 1-8.

Figure 1a-c shows the ventilation system 1 from the side in sectional view, from the top and from the end, where Fig. 1a shows a ventilation system 1, where an air flow through the ventilation system 1 is indicated by an air flow arrow 2, where the air is taken in through an inlet 3, an inlet chamber 4, a countercurrent heat exchanger 5, an outlet chamber 6, a ventilator air inlet 7, through a ventilator 8 and out from an outlet 9.

Figure 1a shows a top side 10 and a bottom side 11, between which an intermediate plate 12 at each end of the ventilation system 1 divides the ventilation system into an inlet chamber 4 facing the top side 10 and an outlet chamber 6 facing the bottom side 11 and thus so that an inlet chamber 4 and an outlet chamber 6 lie on either side of the countercurrent heat exchanger 5.

Figure 1b shows the ventilation system 1 seen from above and also from the top side 10, where the outer dimensions of the ventilation system are bounded by a housing 13, where the two inlet chambers 4 can be seen on either side of the countercurrent heat exchanger 5.

Figure 1b also shows that there is an air shield 14 around each ventilator 8 such that the air is taken around the ventilator 8, thus avoiding turbulence in the inlet chamber 4. It is likewise evident that there is an air guide 15 on the top side of the intermediate plate 12 and also in the inlet chamber 4, which also helps to take the air through the inlet chamber 4 and minimize turbulence.

It is also evident from Fig. 1b that the ventilator 8 has a ventilator housing 16, which has the shape of a snail-shaped housing, while the ventilator housing 16 is dimensioned for the type of ventilator 8, which draws air in at the center of the ventilator 8 and then forces the air out at the outlet 9.

Figure 1c shows the ventilation system 1 seen from the end, showing that the inlet 3 is displaced such that the air enters the housing 13 on the top side of the intermediate plate 12 and thus enters the inlet chamber 4, while the outlet 9 is likewise displaced in such a way that the air emerges from the housing 13 at the top side of the intermediate plate 12 and thus from the outlet chamber 6 via the ventilator air inlet 7 and outlet 9.

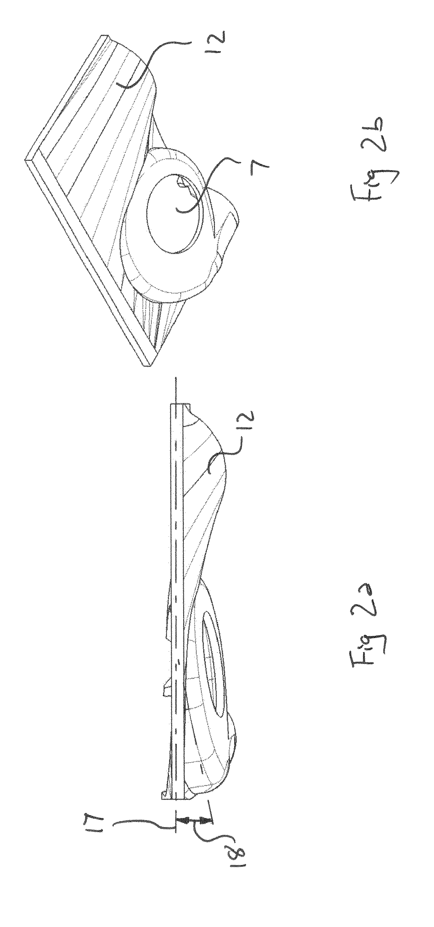

Figure 2a-b shows the intermediate plate 12 seen from the front and from the bottom, where Fig. 2a shows the intermediate plate 12, which has a plane 17 and an angle 18 between the plane 17 and means for mounting of a ventilator 19. It likewise emerges from the figure that the intermediate plate 12 is double-curved in its configuration.

Having the intermediate plate 12 double-curved solves many problems, namely, that the intermediate plate 12 is able to separate the air flows in the ventilation system 1 and isolate the air from the inlet 3 and the outlet 9, yet at the same time optimize the air flows on both sides of the intermediate plate 12. Furthermore, the intermediate plate 12 has means of mounting a ventilator 19, where the means 19 produce an inclination/angle of both the ventilator 8 and the ventilator housing 16, which substantially reduces the area of the outlet chamber underneath.

Figure 2b shows the intermediate plate 12 seen from the bottom or from the side facing the outlet chamber 6, where there is a ventilator air inlet 7.

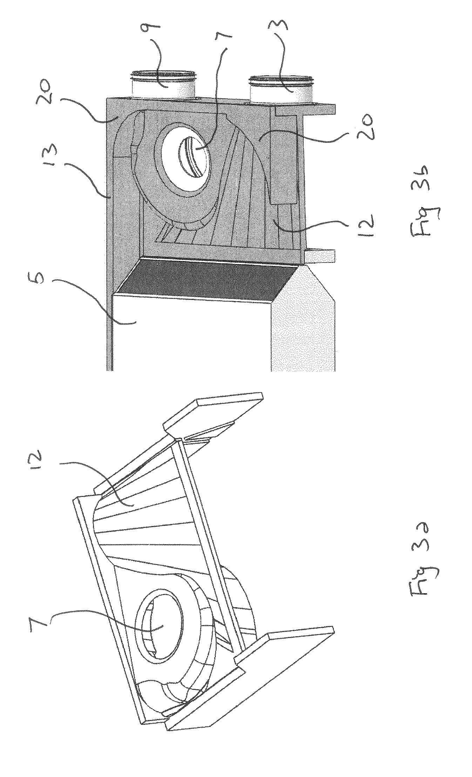

Figure 3a-b shows the intermediate plate 12, again seen from the bottom or from the side facing the outlet chamber 6, where the double-curved configuration is clearly seen and where Fig. 3b furthermore shows the intermediate plate 12 with the countercurrent heat exchanger 5, a portion of the housing 13 and a further air shield 20, which likewise ensures a more even air stream.

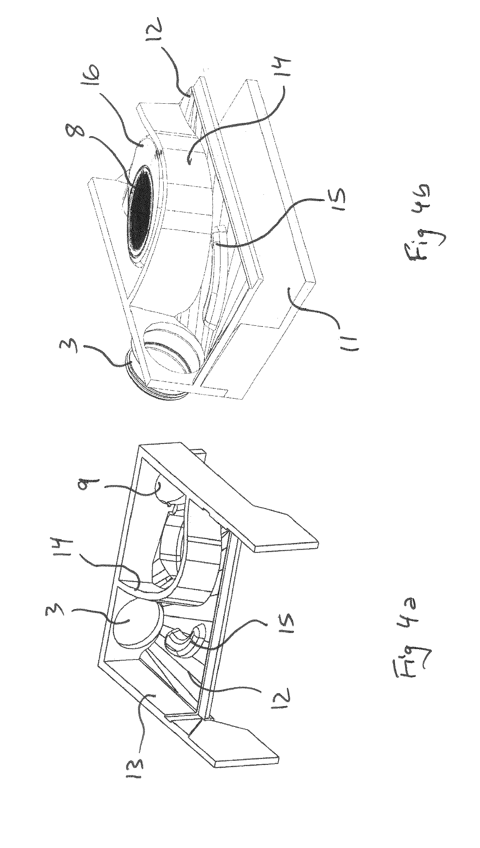

Figure 4a-b shows the intermediate plate seen from the top or from the side facing the inlet chamber 4, where it emerges from Fig. 4a that both inlet 3 and outlet 9 run respectively into and out from the top side of the intermediate plate 12. Figure 4b furthermore shows the intermediate plate 12 with inlet 3, air guide 15, air shield 14 and ventilator 8 with ventilator housing 16.

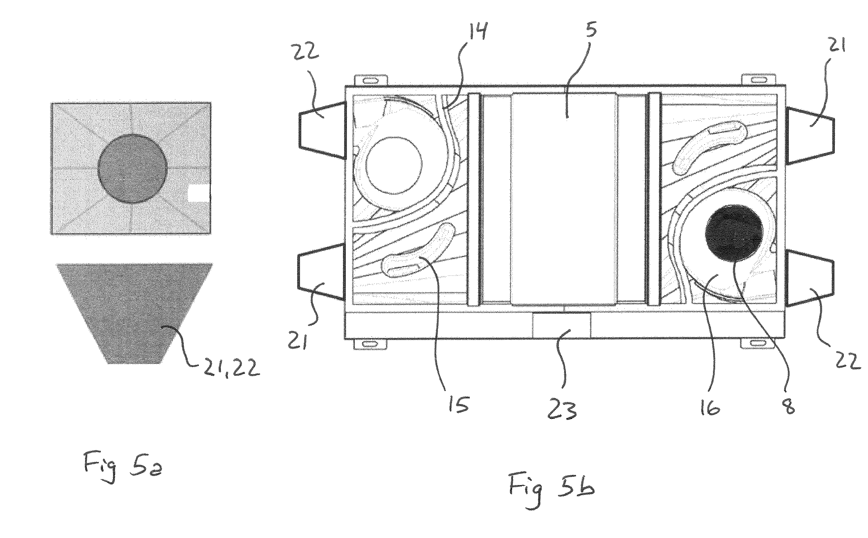

Figure 5a-b shows an example of alternative pipe connections, here in the form of conical inlet pipe 21 and outlet pipe 22, where Fig. 5a shows the transition from a square to a round pipe, while Fig. 5b is basically the same as Fig. 1b, but with conical inlet pipe 21 and outlet pipe 22. A by-pass valve 23 can be placed as shown here at the side of the countercurrent heat exchanger 5.

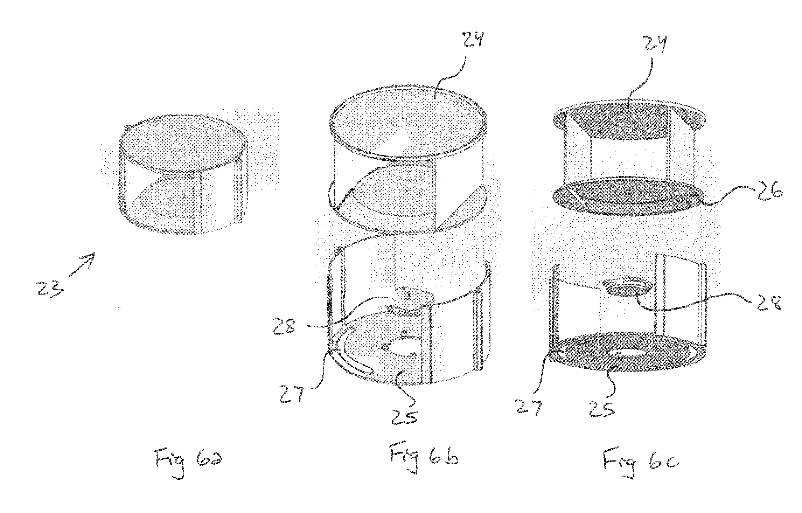

Figure 6a-c shows a by-pass valve 23 respectively assembled and in exploded view, where Fig. 6a shows the by-pass valve as an assembled unit, while Fig. 6b and Fig. 6c show the by-pass valve 23 respectively in perspective view from above and in perspective view from below.

The by-pass valve 23 comprises a top section 24 and bottom section 25 made of plastic, for example, which can be screwed or clamped together or secured with a lock. In the top section 24 there are a number of integrated guide pins 26, corresponding to a number of tracks 27 in the bottom section 25, where the tracks 27 determine how long the top section 24 can be open.

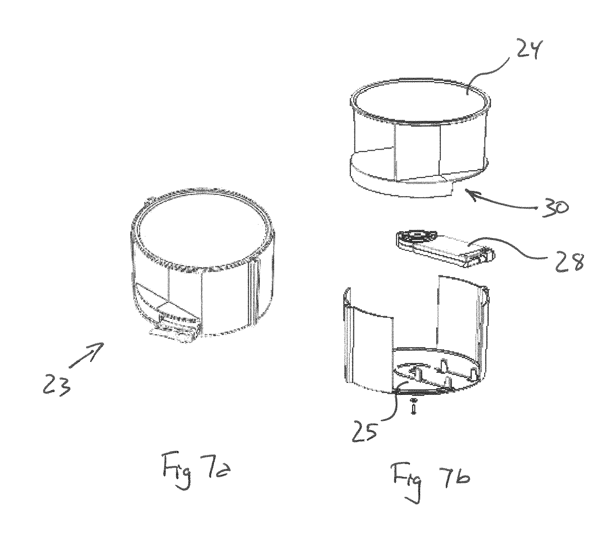

Figure 7a-b shows a by-pass valve 23 in another embodiment, where the top section 24 has an integrated track 30, and the bottom section 25 has a strong rib as an end stop. The motor is firmly plugged into the bottom section 25 and secured with a screw, which is installed from below.

The by-pass valve 23 has the option of on/off or modulating settings, and it is a complete unit with the integrated 28. The volume of air depends on the diameter and depth of the by-pass valve, and the purpose is to obtain fresh air around the countercurrent heat exchanger 5, in part for faster cooldown of the building in the summertime and for minimization of any icing of the countercurrent heat exchanger 5 kin the wintertime at low outdoor temperature.

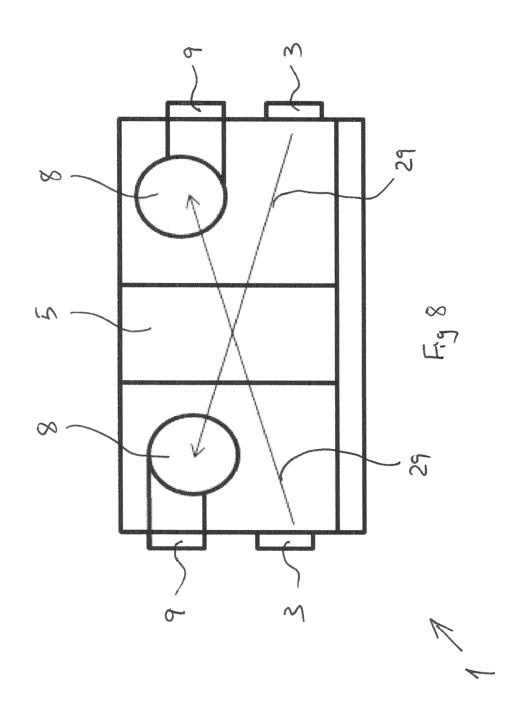

Figure 8 shows the ventilation system 1 in an embodiment where the systems of the ventilation system are mirror-image, which makes it easier to mount the ventilation system 1 in multiple-floor buildings, for example, where the apartments are mirror images in regard to each other. In such a mirror-image building, the pipes going to the inlet 3 and the pipes from the outlet 9 normally or often intersect each other, but with the ventilation system 1 in the embodiment shown here it is possible to lead the pipes going to the inlet 3 and the pipes coming from the outlet 9 alongside each other. The advantage of this is that the installation is easier, and a higher pressure can be provided in the rest of the piping system, since there is no pressure loss due to intersecting pipes. The air flow 29 through the ventilation system 1 is shown by arrow in the direction from inlet 3 to outlet 9.

## Claims

1. A ventilation system, comprising a housing with a countercurrent heat exchanger, plus two systems, wherein each system comprises at least one inlet, one outlet, an inlet chamber, an outlet chamber, and a ventilator with a motor, and wherein each system comprises at least the following connections: inlet, inlet chamber, countercurrent heat exchanger, outlet chamber, ventilator air inlet, and outlet, and wherein a ventilator is provided in connection with each ventilator air inlet, **characterized in that** the inlet chambers and the outlet chambers are comprised of at least parts of the housing, the countercurrent heat exchanger, and a double-curved intermediate plate, wherein the intermediate plate has a ventilator air inlet and, connected to this, means of installation of a ventilator.

2. The ventilation system according to claim 1, **characterized in that** each intermediate plate at the place where means of installation of a ventilator are disposed has an angle of 5-45 degrees, preferably 5-15 degrees, more preferably 10 degrees in relation to the plane of the intermediate plate.

3. The ventilation system according to anyone of claims 1 and 2, **characterized in that** each intermediate plate comprises at least one air guide and an air shield.

4. The ventilation system according to anyone of claims 1 to 3, **characterized in that** each ventilator is a radial ventilator, and each ventilator is encapsulated in a snail-shaped ventilator housing.

5. The ventilation system according to anyone of claims 1 to 4, **characterized in that** each ventilator is driven by a motor and controlled by a frequency converter.

6. The ventilation system according to anyone of claims 1 to 5, **characterized in that** the countercurrent heat exchanger comprises flexible plates.

7. The ventilation system according to anyone of claims 1 to 6, **characterized in that** the countercurrent heat exchanger comprises a by-pass valve.

8. The ventilation system according to claim 7, **characterized in that** the by-pass valve comprises a complete unit with integrated motor, which unit comprises at least two complementary parts, wherein a motor drives the at least one part in relation to the other part.

9. The ventilation system according to anyone of claims 1 to 3, **characterized in that** inlets and outlets are conical.

10. The ventilation system according to anyone of claims 1 to 9, **characterized in that** all motors and frequency converters are integrated into the housing of the ventilation system.
